(19) Europäisches Patentamt
European Patent Office
Office européen des brevets

(11) **EP 3 557 292 A1**

(12) **EUROPEAN PATENT APPLICATION**

(43) Date of publication:
**23.10.2019 Bulletin 2019/43**

(51) Int Cl.:
*G02B 5/13* (2006.01)    *G02B 5/136* (2006.01)

(21) Application number: **18203992.5**

(22) Date of filing: **01.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.04.2018 US 201815957662**

(71) Applicant: **Clearink Displays, Inc.**
**Fremont CA 94538 (US)**

(72) Inventor: **FLEMING, Robert J.**
**San Jose, CA California 95119 (US)**

(74) Representative: **Browne, Robin Forsythe et al**
**Hepworth Browne**
**15 St Paul's Street**
**Leeds LS1 2JG (GB)**

(54) **STATIC SEMI-RETRO-REFLECTIVE DISPLAYS**

(57) Conventional retro-reflective static signage is primarily constructed of either heavy metal containing high refractive index glass beads embedded in a film or narrow viewing angle corner cubes. Disclosed herein are embodiments of static display signage having polymer-based circularly symmetric convex protrusions absent of heavy metals which reflect light in a semi-retro-reflective manner with wider viewing angles.

Fig. 1

## Description

The instant disclosure is generally directed to semi-retro-reflective image displays. In certain embodiments, the semi-retro-reflective image displays defines a passive layer (i.e., lacking external or battery power) configured to adhere to a surface.

## BACKGROUND

Conventional retro-reflective static traffic signage is primarily constructed of two basic types of design. The first conventional design comprises high refractive index glass beads embedded in a film. The beads further have a metallic light reflector coating on the opposite side of the beads. There are health hazards involved in manufacturing and application of the glass beads. For example, the beads contain heavy metals in order to attain high refractive indices. Additional safety measures must be taken for the workers involved. This greatly adds to the cost of manufacture of the beads and the retro-reflective film as the result of added manufacturing steps and safety measures.

The second type of conventional retro-reflective signage design comprises of micro-replicated corner cube retroreflectors. Corner cube signage comprises corner cube structures with an air gap behind the structures to allow for total internal reflection. Though the reflectivity is high in corner cube-based signage, the actual viewing angle is narrow in order to view the high reflectivity.

Thus, there is a need to address the shortcoming of the conventional semi-retro-reflective designs.

## STATEMENT OF INVENTION

According to a first aspect there is provided a semi-retro-reflective display, comprising:

a transparent front sheet having a first surface and a second surface;
a plurality of protrusions facing away from the second surface of the transparent front sheet, the plurality of protrusions having a first refractive index;
a second medium abutting the plurality of protrusions, the second medium having a second refractive index; and
a rear substrate positioned below the second medium;

wherein the semi-retro-reflective display reflects light within an angular range of about ±30 degrees of the incident direction.

According to a second aspect there is provided a semi-retro-reflective display, comprising:

a transparent front sheet having a first surface and a second surface;
a plurality of hemispherical protrusions facing away from the second surface of the transparent front sheet, the plurality of hemispherical protrusions having a first refractive index;
a second medium abutting the plurality of protrusions, the second medium having a second refractive index; and
a rear substrate positioned below the second medium;

wherein the hemispherical protrusions comprise a ratio of hemispherical height to the hemispherical width and a tangent angle ($\alpha$).

The display may define a static semi-retro-reflective display.

The protrusions may be convex. The protrusions may be substantially circularly symmetric.

The protrusions may have a diameter in the range of about 2-500 microns.

The rear substrate may further comprise an adhesive layer. The rear substrate may further comprise a release layer.

The display may further comprise an image layer.

The second medium may comprise a clear medium.

The display may further comprise a support spanning from one of a plurality of protrusions to the rear substrate.

The second medium may be a gas. At least one support may span from one of the plurality of protrusions to the rear substrate.

The display may further comprise a light reflective coating to conform to the surface of the plurality of protrusions.

The ratio of the first refractive index to the second refractive index may be about 1.05 to 2.20.

The tangent angle ($\alpha$) may be in the range of about 60-80 degrees.

The display may further comprise a pitch distance.

## BRIEF DESCRIPTION OF DRAWINGS

These and other embodiments of the disclosure will be discussed with reference to the following exemplary and non-limiting illustrations, in which like elements are numbered similarly, and where:

Fig. 1 schematically illustrates a cross-section of a portion of a semi-retro-reflective display according to one embodiment of the disclosure;

Fig. 2 schematically illustrates a cross-section of a portion of a total internal reflection based semi-retro-reflective display according to one embodiment of the disclosure;

Fig. 3A is an exploded view of a single convex protrusion in a total internal reflection based semi-retro-reflective display illustrating height and width;

Fig. 3B is an exploded view of a single convex protrusion in a total internal reflection based semi-retro-reflective display illustrating a tangent angle;

Fig. 3C schematically illustrates a cross-section of two convex protrusions of a static semi-retro-reflective image display separated by a spacing; and

Fig. 3D schematically illustrates a cross-section of two convex protrusions of a static semi-retro-reflective image display with negative spacing.

## DETAILED DESCRIPTION

Throughout the following description specific details are set forth in order to provide a more thorough understanding to persons skilled in the art. However, well-known elements may not have been shown or described in detail to avoid unnecessarily obscuring the disclosure. Accordingly, the description and drawings are to be regarded in an illustrative, rather than a restrictive, sense.

As used herein, semi-retro-reflective display generally refers to a display that has reflected light rays return within an angular range (roughly +/- 30 degrees) of the incident direction. The semi-retro-reflection characteristic is a result of the fact that the convex protrusions are curved, not flat, and therefore the number of reflections that a light ray undergoes and the subsequent final direction of the light ray, depends on the location where the incident light ray strikes the display. A hemispherical-based reflector of the present application enables TIR reflection at very wide angles. As a result, the appearance is more desirable diffuse or paper-like (i.e. more white) because there is diversity in the reflected direction that depends on where the light strikes the display, and that there is no sharp cut-off as a function of viewing angle of the display as observed in corner cube-based displays.

Certain embodiments of the disclosure relate to retro-reflective displays that may adhere to a substrate (or used alone) to provide a signage. In an exemplary embodiment, the disclosure relates to semi-retro-reflective displays comprising of a transparent sheet further comprising a plurality of convex protrusions, light reflection layer 112 and an adhesive layer. In another embodiment, the disclosure relates to semi-retro-reflective displays comprising of a transparent sheet further comprising a plurality of convex protrusions, metallic light reflection layer, an air gap, and an adhesive layer.

According to certain embodiments of the disclosure, a static retro-reflective display may comprise convex protrusions with circular symmetry that allows for semi-retro-reflection of light. Display signage comprising circularly symmetrical convex protrusions of a refractive index of about 1.5 or higher may further comprise an air filled gap of lower refractive index capable of totally internally reflecting incident light at angles greater than $\theta_c$. Display signage comprising circularly symmetric convex protrusions may further comprise one or more of an adhesive layer, directional front light, image layer or a light diffuser layer.

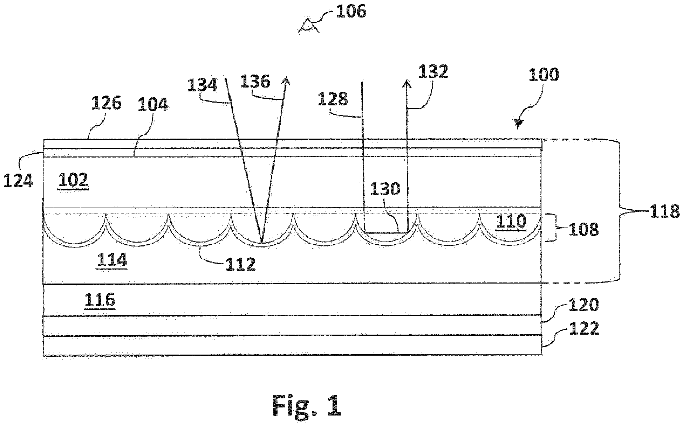

Fig. 1 schematically illustrates a cross-section of a portion of a semi-retro-reflective display according to one embodiment of the disclosure. Semi-retro-reflective display embodiment 100 in Fig. 1 comprises a transparent sheet 102 with outward surface 104 facing viewer 106. In an exemplary embodiment, sheet 102 may comprise a flexible glass. In an exemplary embodiment, sheet 102 may comprise glass of thickness in the range of about 20-250 microns. Sheet 102 may comprise a flexible glass such as SCHOTT AF 32® eco or D 263® T eco ultra-thin glass. Sheet 102 may comprise a polymer such as polycarbonate. In an exemplary embodiment, sheet 102 may comprise a flexible polymer.

The inward surface of sheet 102 may further comprise a plurality 108 of individual convex protrusions 110. Protrusions 110 may have a diameter of at least about 2 microns. In some embodiments, protrusions 110 may have a diameter in the range of about 2-5000 microns. In other embodiments, protrusions 110 may have a diameter in the range of about 2-500 microns. In still other embodiments, protrusions 110 may have a diameter in the range of about 2-100 microns. Protrusions 110 may have a height of at least about 2 microns. In some embodiments, the protrusions may have a height in the range of about 2-5000 microns. In other embodiments, protrusions 110 may have a height in the range of about 2-500 microns. In still other embodiments, protrusions 110 may have a height in the range of about 2-100 microns. In some embodiments, front sheet 102 and protrusions 110 may be a continuous sheet of substantially the same material. In an exemplary embodiment, front sheet 102 may comprise glass. Front sheet 102 may comprise a polymer such as polycarbonate. In some embodiments, convex protrusions 110 may be in the shape of hemispheres as illustrated in Fig. 1. Protrusions 110 may be of any shape or size or a mixture of shapes and sizes. Protrusions 110 may be elongated hemispheres or hexagonally shaped or a combination thereof. In an exemplary embodiment, protrusions 110 may have circular symmetry. In some embodiments, convex protrusions 110 may be randomly sized and shaped. In some embodiments the protrusions may be faceted at the base and morph into a smooth hemispherical or circular shape at the top. In other embodiments, protrusions 110 may be hemispherical or circular in one plane and elongated in another plane. In some embodiments, front sheet 102 and layer of convex protrusions 108 may be a continuous layer. In an exemplary embodiment, convex protrusions 110 may be manufactured by micro-replication.

Semi-retro-reflective display embodiment 100 may further comprise a light reflective coating 112. In an exemplary embodiment, coating 112 may conform to the surface of the plurality of convex protrusions 108. Coating 112 may comprise a metal such as aluminum, chrome, copper or silver. The light reflective coating 112 may be formed by sputtering, vacuum deposition or other method. Light reflective coating 112 may be continuous or patterned. Light reflective coating 112 may comprise one or more of $TiO_2$ or Teflon™.

Semi-retro-reflective display embodiment 100 may further comprise an adhesive layer 114. Adhesive layer 114 may comprise a polymer. Adhesive 114 may comprise one or more of a solvent-based adhesive, emulsion adhesive, polymer dispersion adhesive, pressure-sensitive adhesive, contact adhesive, hot-melt adhesive, multi-component adhesive, ultra-violet (UV) light curing adhesive, heat curing adhesive, moisture curing adhesive, natural adhesive or any other synthetic adhesive.

Semi-retro-reflective display embodiment 100 may further comprise a rear support sheet 116. Rear sheet 116 may be one or more of a metal, plastic, wood or other material. Sheet 116 may one or more of glass, polycarbonate, polymethylmethacrylate (PMMA), polyurethane, acrylic, polyvinylchloride (PVC) or polyethylene terephthalate (PET). Sheet 116 may be rigid or flexible. Sheet 116 may be a release sheet where it may be readily removed such that multi-layered structure 118 may be laminated or adhered to any structure or location where a static display is desired. Display 100 may be placed on a traffic sign.

In an exemplary embodiment, display 100 may further comprise a second adhesive layer 120. Adhesive layer 120 may comprise a polymer. Adhesive 120 may comprise one or more of a solvent-based adhesive, emulsion adhesive, polymer dispersion adhesive, pressure-sensitive adhesive, contact adhesive, hot-melt adhesive, multi-component adhesive, ultra-violet (UV) light curing adhesive, heat curing adhesive, moisture curing adhesive, natural adhesive or any other synthetic adhesive.

In an exemplary embodiment, display 100 may further comprise (optional) rear release sheet 122. Release sheet 122 may be removed to adhere display 100 to a surface.

Display embodiment 100 may further comprise transparent image layer 124. Transparent image layer 124 may be continuous or patterned to convey information to a viewer such as one or more of a picture, words, numbers or signage. Layer 124 may comprise one or more colors. Image layer 124 may comprise at least one dye. Image layer 124 may impart at least one color to the display. Layer 124 may be adhered to display 100 by an adhesive.

Display embodiment 100 may optionally include transparent outer layer or coating 126. Layer 126 may be a protective layer. Layer 126 may protect the display from physical damage or UV-light damage. Protective layer 126 may also comprise at least one color in a continuous or patterned manner. Layer 126 may be flexible. Layer 126 may be glass or a polymer.

Display embodiment 100 may reflect light as follows as shown in Fig. 1. In a first example reflection mode, incident light ray 128 may pass through layers 124, 126 and sheet 102. Light ray 128 may reflect off of surface of layer 112 at the interface of the surface of the plurality of protrusions 110 and layer 112. Reflected light ray 130 may be reflected towards another surface of the same protrusion 110, then reflected back towards viewer 106 as retro-reflected light ray 132. In a second example reflection mode, light may pass through convex protrusions 110 and reflect back towards viewer 106 by a single reflection. This is represented by incident light ray 134 reflected back towards viewer 106 as reflected light ray 136.

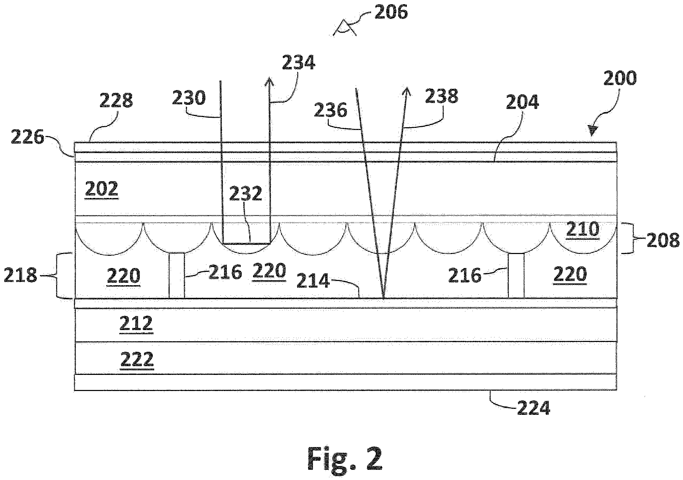

Fig. 2 schematically illustrates a cross-section of a portion of a total internal reflection based semi-retro-reflective display according to another embodiment of the disclosure. Total internal reflection (TIR) semi-retro-reflective display embodiment 200 in Fig. 2 comprises a transparent sheet 202 with outward surface 204 facing viewer 206. In an exemplary embodiment, sheet 202 may comprise a rigid or flexible glass. In an exemplary embodiment, sheet 202 may comprise glass of thickness in the range of about 20-250 microns. Sheet 202 may comprise a flexible glass such as SCHOTT AF 32® eco or D 263® T eco ultra-thin glass. Sheet 202 may comprise a polymer such as polycarbonate. In an exemplary embodiment, sheet 202 may comprise a flexible polymer.

The inward surface of sheet 202 may further comprise a plurality 208 of individual convex protrusions 210. In an exemplary embodiment, protrusions 210 may be formed by micro-replication. In certain embodiments, the protrusions may include additives having a refractive index in the range of about 1.5 to 2.2. The refractive index of protrusions 210 may be greater than about 1.4. In certain other embodiments, the refractive index of protrusions 210 may have a refractive index of about 1.4 to about 1.9. In some embodiments, front sheet 202 and protrusions 210 may be a continuous sheet of substantially the same material. In other embodiments, front sheet 202 and protrusions 210 may be formed of different materials having similar or different refractive indices. In an exemplary embodiment, protrusions 210 may comprise a high refractive index polymer. High refractive index polymers that may be used may comprise high refractive index additives such as metal oxides. The metal oxides may comprise one or more of $SiO_2$, ZrO, $ZrO_2$, ZnO, $ZnO_2$ or $TiO_2$. In some embodiments, the convex protrusions 210 may be in the shape of hemispheres as illustrated in Fig. 2. Protrusions 210 may be of any shape or size or a mixture of shapes and sizes. In an exemplary embodiment, protrusions 210 may have circular symmetry. Protrusions 210 may be elongated hemispheres or hexagonally shaped or a combination thereof. In some embodiments, the convex protrusions may be randomly sized and shaped. In some embodiments, the protrusions may be faceted at the base and morph into a smooth hemispherical or circular shape at the top. In other embodiments, protrusions 210 may be hemispherical or circular in one plane and elongated in another plane. In some embodiments, front sheet 202 and plurality of convex protrusions 208 may be a continuous layer.

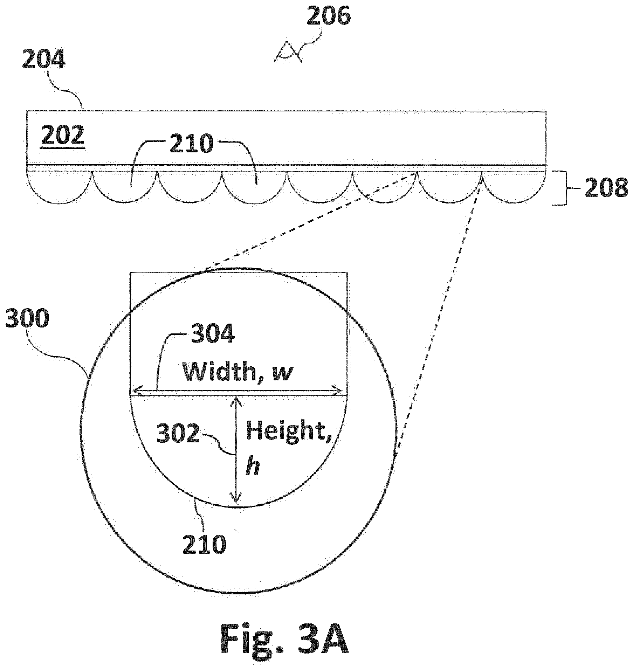

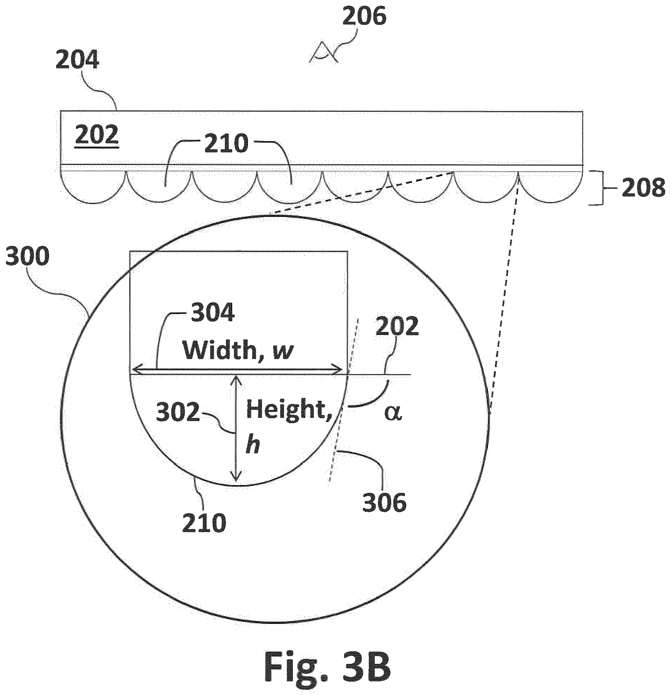

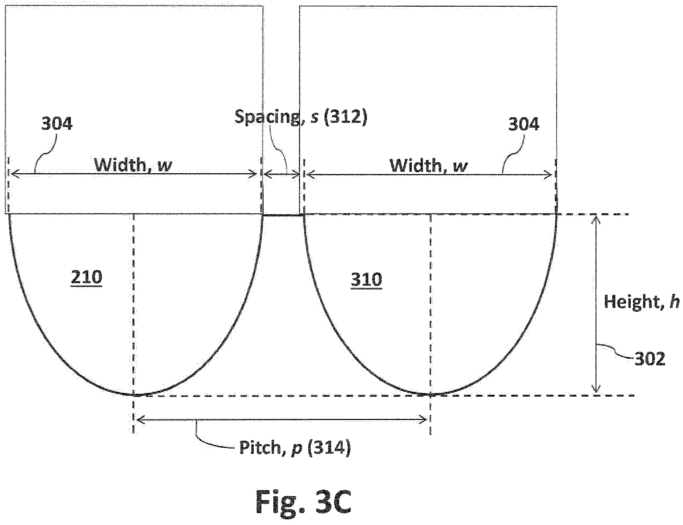

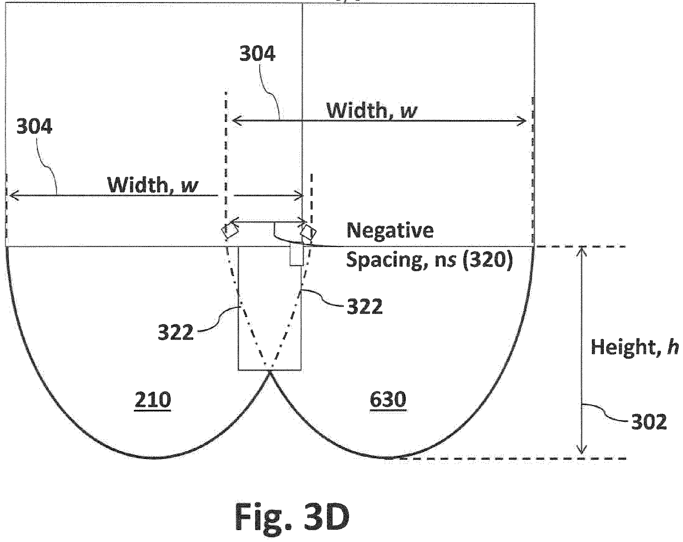

Fig. 3A is an exploded view of a single convex protrusion in a static TIR-based semi-retro-reflective display illustrating height and width. Exploded view 300 in Fig. 3A illustrates how a protrusion may be characterized by height (*h*) 302, width (*w*) 304 and aspect ratio (*h/w*). The height 302 and width 304 are denoted by double-headed arrows in Fig. 3. The aspect ratio may be determined by dividing the height (*h*) 302 of protrusion 210 by the width (*w*) 304 of protrusion 210. Height 302 may be measured from the base of the protrusion, where it is adhered to sheet 202 of the same or different material, to the top or peak of protrusion 210 as illustrated in Fig. 3A. Width 304 of protrusion 210 may be measured at the widest dimension of the base where it may be adhered to sheet 202 of the same or different material. With convex protrusions having circular symmetry, the width may also be referred to as the diameter. In an exemplary embodiment, at least one protrusion 210 in a static TIR-based semi-retro-reflective display may have a width (*w*) 304 of at least about 0.1 microns. Protrusion 210 may have a width of at least about 2 microns. In some embodiments, protrusion 210 may have a width in the range of about 0.1-5000 microns. In other embodiments, protrusion 210 may have a width in the range of about 0.1-500 microns. In still other embodiments, protrusion 210 may have a width in the range of about 0.1-100 microns. In still other embodiments, protrusion 210 may have a width in the range of about 0.1-20 microns.

In an exemplary embodiment, at least one protrusion 210 in a static TIR-based semi-retro-reflective display may have a height 302 of at least about 0.1 microns. In some embodiments, protrusion 210 may have a height in the range of about 0.1-5000 microns. In other embodiments, protrusion 210 may have a height in the range of about 0.1-500 microns. In still other embodiments, protrusion 210 may have a height in the range of about 0.1-100 microns. In still other embodiments, protrusion 210 may have a height in the range of about 0.1-20 microns.

In an exemplary embodiment, at least one protrusion 210 in a static TIR-based semi-retro-reflective display illustrated in exploded view 300 in Fig. 3A may have an aspect ratio (*h/w*) of at least about 0.1. In some embodiments, protrusion 210 may have an aspect ratio in the range of about 0.1-10. In other embodiments, protrusion 210 may have an aspect ratio in the range of about 0.1-5. In an exemplary embodiment, protrusion 210 may have an aspect ratio in the range of about 0.5-2. In an exemplary embodiment, protrusion 210 may be approximately in the shape of a hemisphere with an aspect ratio of about 0.9-1.1.

Fig. 3B is an exploded view of a single convex protrusion in a total internal reflection based semi-retro-reflective display illustrating a tangent angle. At least one convex protrusion 210 in a static TIR-based semi-retro-reflective display illustrated in exploded view 300 in Fig. 3B may be characterized by a tangent angle, α. Tangent angle α is the angle between the tangent of a line 306 on the surface of protrusion 210 and surface of front sheet 202. In certain embodiments, tangent angle α of at least one convex protrusion 210 may be in the range of about 50-90 degrees. In some embodiments, tangent angle α of at least one convex protrusion 210 may be in the range of about 60-90 degrees. In other embodiments, tangent angle α of at least one convex protrusion 210 may be in the range of about 60-80 degrees. In still other embodiments, tangent angle α of at least one convex protrusion 210 may be in the range of about 70-80 degrees. In some embodiments, two or more convex protrusions in a static semi-retro-reflective may have different tangent angles.

A TIR-based semi-retro-reflective image display as illustrated in Fig. 3C may comprise at least one convex protrusion adjacent to a second convex protrusion separated by a distance or spacing. Fig. 3C schematically illustrates a cross-section of two convex protrusions of a static semi-retro-reflective image display separated by a spacing. In the embodiment shown in Fig. 3C, a first protrusion 210 is adjacent a second protrusion 310 and have approximately the same dimensions of height, width and aspect ratio. In other embodiments, adjacent protrusions in a TIR-based semi-retro-reflective image display may have different dimensions of height, width and aspect ratio. In some embodiments, spacing (s) 240 between adjacent protrusions may be greater than about 0.001 microns. In certain embodiments, the spacing may be in the range of about 0.001-10 microns. In other embodiments, the spacing may be in the range of about 0.001-20 microns. In still other embodiments, the spacing may be in the range of about 0.001-2 microns. In an exemplary embodiment, the spacing between two adjacent protrusions in a static semi-retro-reflective image display may be in the range of about 0.1-2 microns. In an exemplary embodiment, there may be no spacing between adjacent protrusions in a static semi-retro-reflective image display. Spacing may also be described by pitch 314. Pitch 314 is the peak-to-peak distance between adjacent convex protrusions. For convex protrusions of similar size, pitch 314 is the sum of the width of a convex protrusion and the spacing distance. Thus, when adjacent convex protrusions touch and there is no spacing, the pitch is equal to the diameter of a convex protrusion. In some embodiments, pitch 314 may vary from protrusion to protrusion as the size of the protrusions vary within an array.

Static semi-retro-reflective image displays as illustrated in Figs. 1-2 may comprise at least one convex protrusion adjacent to a second convex protrusion with a negative distance or spacing between the protrusions. Fig. 3D schematically illustrates a cross-section of two convex protrusions of a static semi-retro-reflective image display with negative spacing. Negative spacing (*ns*) 320 may occur when there is overlap between adjacent protrusions. Protrusions 210/310 in Fig. 3D have overlap where dot-dashed lines 322 shows the outline of a protrusion if the protrusion did not make contact as illustrated in Fig. 3B or when touching at the base. In some embodiments, negative spacing between two adjacent convex protrusions in a static semi-retro-reflective image display may be greater than about 0.001 microns. In other embodiments, the negative spacing may be in the range of about 0.001-10 microns. In still other embodiments, the negative spacing may be in the range of about 0.001-2 microns. In an exemplary embodiment, the negative spacing between two adjacent protrusions in a static semi-retro-reflective image display may be in the range of about 0.1-5 microns.

It should be known that the dimensions of height, width and spacing distance of adjacent protrusions in static semi-retro-reflective image displays may be determined by their application and the lighting conditions that the display may be subjected to. The dimensions may be tuned such that the display brightness may be optimized for viewing conditions of the respected application.

TIR-based semi-retro-reflective display embodiment 200 in Fig. 2 may further comprise a rear support sheet 212. Rear sheet 212 may be one or more of a metal, plastic, wood or other material. Sheet 212 may one or more of glass, polycarbonate, polymethylmethacrylate (PMMA), polyurethane, acrylic, polyvinylchloride (PVC) or polyethylene terephthalate (PET). Sheet 212 may be rigid or flexible.

TIR-based semi-retro-reflective display embodiment 200 may further comprise a light reflective layer 214 located on rear support sheet 212. Layer 214 may comprise a metal such as aluminum, chrome, copper or silver. Light reflective layer 214 may be formed by sputtering, vacuum deposition or other method. Light reflective layer 214 may be continuous or patterned. Light reflective layer 214 may comprise one or more of $TiO_2$ or Teflon™.

TIR-based semi-retro-reflective display embodiment 200 may further comprise spacers 216. The spacers may maintain a substantially uniform spacing distance or gap 218 between layer 214 and the plurality of convex protrusions 208. Spacer structures may be used to support the various layers in the displays. The spacer structures may be in the shape of circular or oval beads, blocks, cylinders or other geometrical shapes or combinations thereof. Spacer structures 216 may comprise glass, metal, plastic or other resin. Gap 218 may be filled with a liquid or gaseous medium 220. In an exemplary embodiment, medium 220 may comprise ambient air or a gas such as argon or $N_2$. In an exemplary embodiment, medium 220 in gap 218 may have a refractive index lower than the refractive index of convex protrusions 210. Medium 220 may have a refractive index in the range of about 1-1.4. In an exemplary embodiment, the ratio of the refractive index of protrusions 210 to the refractive index of medium 220 may be in the range of about 1.05 to about 2.20.

TIR-based semi-retroreflective display embodiment 200 may further comprise an adhesive layer 222. Adhesive layer 222 may be located behind the rear support sheet. In other embodiments, adhesive layer 222 may be interposed between light reflective layer 214 and rear support 212 such that rear support layer 212 may also act as a release sheet to expose adhesive layer 222. Adhesive layer 222 may comprise a polymer. Adhesive 222 may comprise one or more of a solvent-based adhesive, emulsion adhesive, polymer dispersion adhesive, pressure-sensitive adhesive, contact adhesive, hot-melt adhesive, multi-component adhesive, ultra-violet (UV) light curing adhesive, heat curing adhesive, moisture curing adhesive, natural adhesive or any other synthetic adhesive.

TIR-based semi-retro-reflective display embodiment 200 may further comprise release sheet 224. Release sheet 224 may be comprised of a material such that it may be readily removed so that the multi-layered structure 200 may be laminated or adhered to any structure or location where a static semi-retro-reflective display is desired. Display 200 may be placed on a traffic sign, wall, roadway, clothing, bicycle, motorized vehicle or other application where it may be desired to have a reflective display.

Display embodiment 200 may further comprise a transparent image layer 226. Layer 226 may be continuous or patterned to convey information to a viewer such as one or more of a picture, words or signage. Layer 226 may comprise one or more colors. Image layer 226 may comprise at least one dye. Image layer 226 may impart at least one color to the display. Layer 226 may be adhered to display 200 by an adhesive.

Display embodiment 200 may further comprise an optional transparent outer layer or coating 228. Layer 228 may be a protective layer. Layer 228 may protect the display from physical damage or UV-light damage. Protective layer 228 may also comprise at least one color in a continuous or patterned manner.

Display embodiment 200 may reflect light as follows. Incident light, represented by light ray 230 in Fig. 2, may pass through layers 226, 228 and sheet 202. Light ray 230 may undergo total internal reflection (TIR) at the interface of transparent sheet 202 and air 220 if the angle of the light to the interface is larger than the critical angle, $\theta_c$. A small critical angle (*e.g.*, less than about 50 degrees) is preferred at the TIR interface since this affords a large range of angles over which TIR may occur. It may be prudent to have air located in gap 218 with preferably as small a refractive index ($\eta_3$) as possible and to have a transparent front sheet 202 comprising a material having a refractive index ($\eta_1$) preferably as large as possible. The critical angle, $\theta_c$, is calculated by the following equation (Eq. 1):

$$\theta_c = \sin^{-1}\left(\frac{\eta_3}{\eta_1}\right) \qquad (1)$$

In a first example mode of reflection, light ray 230 may be reflected as light ray 232 towards another interface of the same protrusion 210 and air 220 where the light ray may then be reflected back towards viewer 206 as semi-retro-reflected light ray 234. In a second example mode of light reflection, incident light may pass directly through the dark pupil region of the convex protrusions 210 at an angle (*i.e.*, where incident light is less than $\theta_c$) where TIR does not occur. This is represented by light ray 236 in Fig. 2. Light ray 236 may be reflected off of layer 214 in a specular manner back towards viewer 206 as reflected light ray 238.

In the embodiments described herein, the convex protrusions of the transparent front sheet may be manufactured by a process step of creating a protrusion master tool made from photolithography with gray-scale. Another manufacturing step may comprise forming replicated protrusions directly onto a substrate. Another manufacturing step may comprise forming replicated protrusions directly onto a substrate using daughter tools or molds. The protrusions may be formed by continuous roll-to-roll manufacturing methods.

A front light may be employed with the disclosed display embodiments to illuminate the surface in dim lighting conditions. The front light system may include a light source, light guide and an array of light extractor elements on the outward surface of the front sheet in each display. The directional light system may be positioned between the outward surface of the front sheet and the viewer. The front light source may define a light emitting diode (LED), cold cathode fluorescent lamp (CCFL) or a surface mount technology (SMT) incandescent lamp. The light guide may be configured to direct light to the front entire surface of the transparent outer sheet while the light extractor elements direct the light in a perpendicular direction within a narrow angle, for example, centered about a 30° cone, towards the front sheet. The light guide may comprise a first outer layer, bottom layer and central core layer. The layers of the light guide may be adhered by one or more optically clear adhesives. An optically clear adhesive layer may be used to adhere a front light system to the outer surface of front sheet 202 in display embodiment 200. A directional front light system may be used in combination with an image layer in the display architectures described herein. In some embodiments, the directional front light system may be flexible. In some embodiments the front light may comprise of one or more of a fluorescent light, compact fluorescent light, incandescent light or halogen light.

In some embodiments, a light diffuser layer may be employed with the disclosed display embodiments. A light diffuser layer may be located on the outer surface of sheet 202 or the outer surface of image layer 226 facing viewer 206. A light diffuser layer may be located on the outer surface of a directional front light system.

The exemplary displays disclosed herein may be used as reflective clothing, bicycle reflectors, motorized vehicle reflectors, signs, road markings, outdoor billboards, traffic signs, wall signs, advertising signs, emergency signs or outdoor signs.

## Claims

1. A semi-retro-reflective display, comprising:

   a transparent front sheet having a first surface and a second surface;
   a plurality of protrusions facing away from the second surface of the transparent front sheet, the plurality of protrusions having a first refractive index;
   a second medium abutting the plurality of protrusions, the second medium having a second refractive index; and
   a rear substrate positioned below the second medium;
   wherein the semi-retro-reflective display reflects light within an angular range of about ±30 degrees of the incident direction.

2. A semi-retro-reflective display, comprising:

   a transparent front sheet having a first surface and a second surface;
   a plurality of hemispherical protrusions facing away from the second surface of the transparent front sheet, the plurality of hemispherical protrusions having a first refractive index;
   a second medium abutting the plurality of protrusions, the second medium having a second refractive index; and
   a rear substrate positioned below the second medium;
   wherein the hemispherical protrusions comprise a ratio of hemispherical height to the hemispherical width and a tangent angle ($\alpha$).

3. The display of claim 2, wherein the tangent angle ($\alpha$) is in the range of about 60-80 degrees.

4. The display of claim 2 or 3, further comprising a pitch distance

5. The display of any preceding claim, wherein the display defines a static semi-retro-reflective display.

6. The display of any preceding claim, wherein the protrusions are convex and substantially circularly symmetric.

7. The display of any preceding claim, wherein the protrusions have a diameter in the range of about 2-500 microns.

8. The display of any preceding claim, wherein the rear substrate further comprises an adhesive layer and a release layer.

9. The display of any preceding claim, further comprising an image layer.

10. The display of any preceding claim, wherein the second medium comprises a clear medium.

11. The display of any preceding claim, further comprising a support spanning from one of a plurality of protrusions to the rear substrate.

12. The display of any preceding claim, wherein the second medium is a gas and wherein at least one support spans from one of the plurality of protrusions to the rear substrate.

13. The display of any preceding claim, further comprising a light reflective coating to conform to the surface of the plurality of protrusions.

14. The display of any preceding claim, wherein the ratio of the first refractive index to the second refractive index is about 1.05 to 2.20.

Fig. 1

**Fig. 2**

206

204

202  210

208

300

304
Width, *w*

302  Height, *h*

210

# Fig. 3A

204

206

202 210

208

300

304
Width, *w*

202

302 Height, *h*

α

210

306

# Fig. 3B

**Fig. 3C**

**Fig. 3D**

Europäisches
Patentamt

European
Patent Office

Office européen
des brevets

## EUROPEAN SEARCH REPORT

Application Number

EP 18 20 3992

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2016/231475 A1 (WHITEHEAD LORNE A [CA])<br>11 August 2016 (2016-08-11)<br>* abstract; figures 1-5 *<br>* paragraphs [0004], [0014] - [0016],<br>[0020]; claim 15 * | 1,2,4-6,<br>9-12,14<br>3,7,8,13 | INV.<br>G02B5/13<br>G02B5/136 |
| Y | US 2015/352884 A1 (FUHSE CHRISTIAN [DE] ET<br>AL) 10 December 2015 (2015-12-10)<br>* abstract; figures 3,4 *<br>* paragraphs [0014], [0016], [0020],<br>[0024] - [0027], [0034], [0036],<br>[0054], [0059], [0070], [0072] * | 3,7 | |
| Y | US 2013/250419 A1 (LOCHBIHLER HANS [DE])<br>26 September 2013 (2013-09-26)<br>* paragraphs [0019] - [0026], [0032],<br>[0051] - [0055], [0059]; figures 1-8 * | 3,7,13 | |
| Y | US 2016/139306 A1 (CHATTERJEE REEMA [US]<br>ET AL) 19 May 2016 (2016-05-19)<br>* abstract; figure 4 *<br>* paragraphs [0032] - [0034], [0039] -<br>[0040], [0046], [0068], [0076], [0077]<br>* | 8,13 | |

TECHNICAL FIELDS
SEARCHED      (IPC)

G02B
G02F

The present search report has been drawn up for all claims

| Place of search | Date of completion of the search | Examiner |
|---|---|---|
| Munich | 25 April 2019 | Blau, Gerd |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ...............................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 18 20 3992

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2019

| Patent document cited in search report | | Publication date | Patent family member(s) | | Publication date |
|---|---|---|---|---|---|
| US 2016231475 | A1 | 11-08-2016 | CN | 105264422 A | 20-01-2016 |
| | | | EP | 2999989 A1 | 30-03-2016 |
| | | | JP | 6469656 B2 | 13-02-2019 |
| | | | JP | 2016521861 A | 25-07-2016 |
| | | | KR | 20160013908 A | 05-02-2016 |
| | | | US | 2016231475 A1 | 11-08-2016 |
| | | | WO | 2014189751 A1 | 27-11-2014 |
| US 2015352884 | A1 | 10-12-2015 | CN | 104955658 A | 30-09-2015 |
| | | | DE | 102013001734 A1 | 31-07-2014 |
| | | | EP | 2951031 A1 | 09-12-2015 |
| | | | RU | 2015136649 A | 10-03-2017 |
| | | | US | 2015352884 A1 | 10-12-2015 |
| | | | WO | 2014117938 A1 | 07-08-2014 |
| US 2013250419 | A1 | 26-09-2013 | CA | 2814872 A1 | 31-05-2012 |
| | | | CN | 103180763 A | 26-06-2013 |
| | | | DE | 102010052665 A1 | 31-05-2012 |
| | | | EP | 2643716 A1 | 02-10-2013 |
| | | | RU | 2013128891 A | 10-01-2015 |
| | | | US | 2013250419 A1 | 26-09-2013 |
| | | | WO | 2012069163 A1 | 31-05-2012 |
| US 2016139306 | A1 | 19-05-2016 | BR | 112015031565 A2 | 25-07-2017 |
| | | | CN | 105359009 A | 24-02-2016 |
| | | | EP | 3014318 A1 | 04-05-2016 |
| | | | JP | 2016522457 A | 28-07-2016 |
| | | | KR | 20160023824 A | 03-03-2016 |
| | | | SG | 11201510308Y A | 28-01-2016 |
| | | | US | 2016139306 A1 | 19-05-2016 |
| | | | WO | 2014209592 A1 | 31-12-2014 |

EPO FORM P0459

For more details about this annex : see Official Journal of the European Patent Office, No. 12/82